# EUROPEAN PATENT SPECIFICATION

(11) **EP 3 637 215 B1**
(45) Date of publication and mention of the grant of the patent: **14.07.2021**
(21) Application number: 18315032.5
(22) Date of filing: 08.10.2018
(51) Int. Cl.: G05D 16/10

(54) **DISCHARGE VALVE FOR A FIRE EXTINGUISHING SYSTEM**
AUSLASSVENTIL FÜR EIN BRANDLÖSCHSYSTEM
SOUPAPE DE DÉCHARGE POUR UN SYSTÈME D'EXTINCTION D'INCENDIE

(43) Date of publication of application: 15.04.2020
(73) Proprietor: EXTINCTIUM, 45300 Pithiviers (FR)
(72) Inventor: Pozo Pinilla, Alfonso, 08950 Esplugues de Llobregat (Barcelona) (ES)
(74) Representative: Gallego Jiménez, José Fernando

(56) References cited:
- EP-A2- 2 829 741
- WO-A1-89/05913
- CA-A- 996 443
- GB-A- 1 576 203

## Description

### Technical field

The present invention discloses a discharge valve for pressurised installations, such as a fire extinguishing system, in which a pressurised fluid is stored at a relatively high pressure and is discharged into a fluid distribution installation suitable for low-to-medium pressures.

The pressurised fluid is a fire-fighting agent (also known as an extinguishing agent or gaseous fire suppression agent), preferably a clean agent such as an inert gas including nitrogen, argon, carbon dioxide, amongst other suitable halon replacements, stored in pressurised vessels at pressures of up to 300 bar.

### State of the Art

In the current state of the art there exists a wide range of discharge valves available, which are commonly used to regulate the pressure of a pressurised fluid, stored in pressure vessels at high pressures (at least 150 bar), which is then inserted in a centralised piping installation, such as a fire-fighting system which uses one or more discharge valves.

The discharge valve is used to reduce as well as regulate the pressure of the pressurised fluid (clean agent) before it enters the pipe installation of the fire-fighting system, as the pipe installation is usually designed for lower pressures, usually set between approximately 50 bar and 100 bar, due to the fact the designing pipe installations suitable for higher pressures greatly increases the cost and use of materials and space available, as well as the maintenance required.

US patent n° US 5899275 discloses a discharge valve which aims to solve this problem. The discharge valve disclosed is connected to an inert gas pressurised vessel and is designed to adjust the pressurised fluid pressure discharged into a piping installation according to a reference pressure inserted in the discharge valve from a constant pressure gas source. The discharge valve is maintained in a closed position due to the effect of a first spring which acts against a flow channel valve blocking a flow channel. The reference pressure from a constant pressure source is inserted into the discharge valve through an inlet, opposite the pressure vessel, and acts against a piston which must overcome a second piston, as well as the first spring, in order to move the flow channel valve, opening the flow channel. When the flow channel is opened an inert gas from the pressure vessel acts against the other end of the piston creating a balance, and therefore the discharge pressure is maintained equal to the reference pressure inserted. Therefore the discharged pressure may be adjusted and regulated by modifying the reference pressure, by modifying the spring constants of the springs used or by modifying the diameter ratio of the piston.

However, in this kind of discharge valves the outlet discharge pressure of the pressurised fluid inserted in the distribution system is regulated by means of a spring and a force equilibrium that is a result of a high pressurised fluid, from a fluid vessel, acting against a surface area of one end of a piston which regulates the flow of the pressurised fluid, said being near the inlet of the discharge valve, a second regulating pressure acting against an opposite end of the piston of the discharge valve, also in an opposite direction, and the opposing force generated by the spring also acting against a surface of the piston. Therefore if the discharge pressure is lower or higher than a predetermined discharge pressure, the piston is moved in order to increase or decrease, respectively, the flow of pressurised fluid and therefore regulate the discharge pressure. The high pressure inserted into the discharge valve, and acting against a surface area of the piston is very difficult to control due to the turbulent flow exiting the pressure vessel that stores the high pressurised fluid and wherein said isn't constant, as it decreases as the quantity of the pressurised fluid stored in the vessel also decreases proportionately.

Therefore, this type of discharge valves presents several issues with regards to the regulation or adjustment of the discharge pressure in a controlled manner, which the present invention aims to overcome by limiting the components involved in the regulation of the discharge pressure.

### Brief description of the invention

The present invention discloses a discharge valve, for regulating a pressurised fluid stored in a pressurised vessel or canister at pressures ranging from 150 bar to 300 bar so it can be discharged into a pipe installation, which is designed for pressures ranging preferably between 50 bar and 90 bar. In a particular embodiment, the pipe installation is part of a fire-fighting system, although it may be part of other suitable systems which require the use of one or more discharge valves. The pressurised fluid is therefore a clean extinguishing agent, preferably an inert gas such as nitrogen, argon, carbon anhydride, amongst many others. The discharge valve disclosed herein aims to solve the issues found in the present state of the art.

The discharge valve comprises a body which has been moulded, shaped and/or machined so that it includes a plurality of hollow chambers connected through a wide variety of passageways or channels with different cross-sections, said body including a first inlet which leads to a first pressurised chamber, said first inlet of the discharge valve is connected to the pressurised fluid vessel output through a suitable connection, such as a threaded connector, although other detachable or non-detachable connections may be used, such as for example soldering or welding, a second inlet which leads to a second pressurised chamber of a pneumatic actuator arranged on a top part of the body of the discharge valve, opposite a pressure inlet of the pressurised fluid vessel, connected to a pressure source, and a discharge outlet connected to an inlet of the pipe installation.

In a particular embodiment, the first pressurised chamber further comprises one or more transversal lateral passageways, substantially parallel to the discharge pressure outlet, which may lead to a rupture disc, and/or a threaded connector suitable for connecting auxiliary devices, such as an access valve.

The rupture disc (also known as pressure safety disc, burst disc or burst diaphragm) is used as a pressure relief safety measure for the discharge valve, protecting the discharge valve, as well as the system or device to which said valve is connected from over-pressurisation. Rupture discs are a single use safety element, and therefore it must be readily accessible by a user in order for it to be changed when necessary.

On the other hand, the threaded connector as mentioned previously may be used to connect auxiliary devices such as an access valve. If such is the case, said access valve is used to guide part of the pressurised fluid inserted into the first pressurised chamber from the fluid storage vessel, and use it as the pressure source for the second inlet which leads to the second pressurised chamber of the pneumatic actuator. Therefore the pressurised fluid inserted in the first chamber is also used, in a controlled manner, to operate the movable mechanism of the discharge valve by inserting it in the pneumatic actuator.

The valve further comprises a movable mechanism, which comprises a piston and a first spring, configured to perform a lineal movement along a central axis of the valve body between a closed position and an open position, in response to an downward force or pressure generated by the pressure source on the movable mechanism, so that in said open position the pressurised fluid from the pressure vessel is transferred from the first chamber to a main chamber of the valve body, located straight after the first chamber from the plurality of hollow chambers. Arranged on a distal end of the piston of the movable mechanism is a plug, in contact with an upper annular surface of said first spring, which controls the flow of the pressurised fluid between the first and main chambers.

In a particular embodiment, the movable mechanism is moved due to a secondary piston configured to perform a lineal movement due to the pressure inserted through the second pressure chamber of the pneumatic actuator which generates a downwards pressure or force on the secondary piston which in turn generates a lineal downwards movement on the piston of the movable mechanism. Due to the lineal downwards movement the secondary piston has on the piston of the movable mechanism, the piston shifts from a closed position to an open position, overcoming an opposing force of the first spring, in order to allow the pressurised fluid to enter the main chamber.

This secondary piston is also part of the pneumatic actuator which includes the second pressurised chamber.

Therefore, the lineal movement of the piston of the movable mechanism is limited either by a pre-set load of the first spring used, the stroke of the secondary piston or a combination of both. Furthermore, the piston of the movable mechanism and the secondary piston of the pneumatic actuator are coaxial.

However, the only role the movable mechanism has in the discharge valve is regulating the flow of the pressurised fluid inserted into the discharge valve from the first pressurised chamber to the main pressurised chamber, in a substantially controlled flow.

In order to regulate and adjust the pressure of the pressurised fluid to a desired discharge pressure to be inserted into the pipe installation through the discharge outlet, the discharge valve further comprises a cylindrical sleeve with an annular inner wall, coaxial to the movable mechanism. Furthermore, the cylindrical sleeve is arranged resting on top of and surrounding a second, pre-set, spring of the valve which generates an opposing force against the annular inner wall of the cylindrical sleeve.

The cylindrical sleeve includes a plurality of orifices distributed radially and at an equal distance from the end of the sleeve, these orifices being preferably equidistant from one another. The plurality of orifices are substantially aligned with a transversal feeding passageways of the main chamber leading towards a discharge passageway leading to the discharge outlet of the valve and towards an annular outlet chamber, so that the pressurised fluid may be transferred, simultaneously, from the main chamber to said annular outlet chamber and the discharge outlet.

The outlet chamber is also connected through passageways to a regulating chamber, which allows the pressurised fluid to exert a pressure on an annular upper surface of the cylindrical sleeve, opposite the inner wall of the cylindrical sleeve, to counteract an opposing force of the second spring.

The regulating chamber is also in communication with the discharge outlet of the valve by means of one or more discharge passageways, so that the pressurised fluid generates a Venturi effect or phenomenon at an end of said discharge passageway (on the discharge outlet side) due to the pressurised fluid exiting the main chamber towards the discharge outlet creating a suction or vacuum.

Changes in the pressure value in the regulating chamber occur and provide a dynamic lineal bidirectional movement of the cylindrical sleeve to regulate the pressure of the fluid outputted into the pipe installation, as a function of the axial position within the valve body of the orifices regarding passageways.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
- **FIG. 1a** illustrates a section of the discharged valve showing the interior of the valve which includes detailed areas A and B represented respectively in **FIG. 1b** and **FIG. 1c****;**
- **FIG. 2** illustrates the cylindrical sleeve included in the discharge valve, as well as different sections of the same; and
- **FIG. 3** is a simplified schematic representation of the discharged valve which represents the force equilibrium that occurs in the valve.

### Detailed description of an embodiment

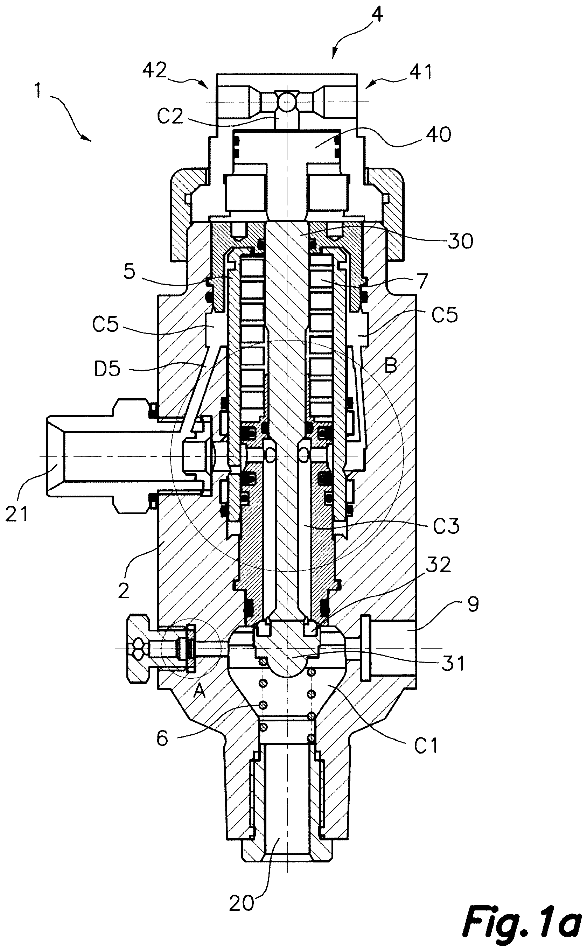

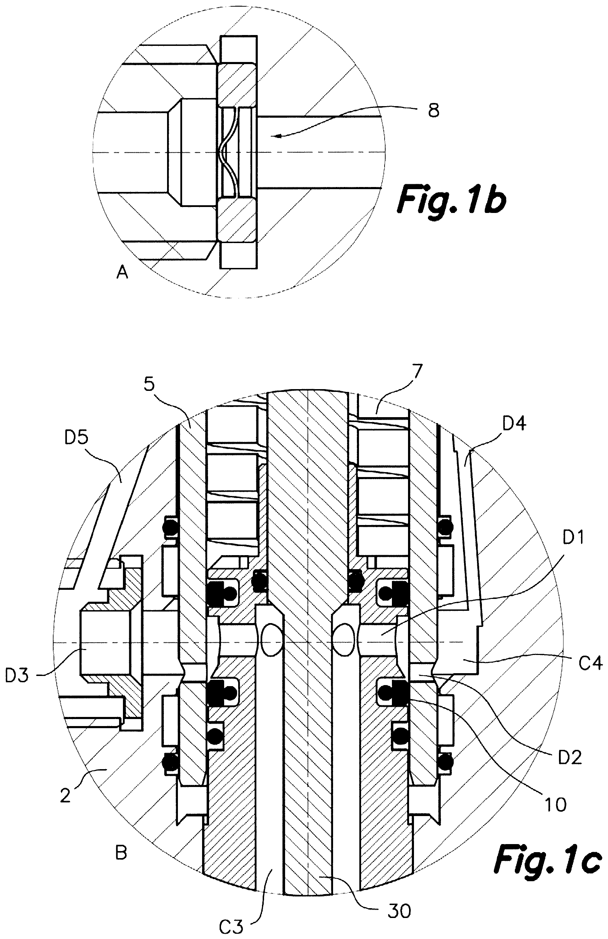

**FIG. 1a** and subsequent detail views seen in **FIG. 1b** and **FIG. 1c****,** which correspond respectively to details **A** and **B** seen in **FIG. 1a****,** illustrate a section of the discharge valve 1 showing the interior of the body 2 and the different components included therein, as well as showing how the different chambers and passageways of the discharge valve 1 are distributed. The discharge valve 1 comprises a movable mechanism 3 made up of a piston 30 with a plug 31 arranged on one of its ends, the movable mechanism 3 regulating the flow of the pressurised fluid between a first chamber C1 and a main chamber C3 of the discharge valve 1. In certain embodiments an additional gasket 32 may be inserted in a recess of the plug 31 to ensure a proper seal.

The movable mechanism 3 performs a lineal movement and is initially in a closed position, until a secondary piston 40 included in a pneumatic actuator 4 performs a downward lineal movement which makes the piston 30 of the movable mechanism 3 move, counteracting a force generated by a first spring 6. The secondary piston 40 is moved by means of a second pressure acting against a surface of the secondary piston 40, wherein said second pressure is inserted into a second pressurised chamber C2 through an inlet 41 from a pressure source.

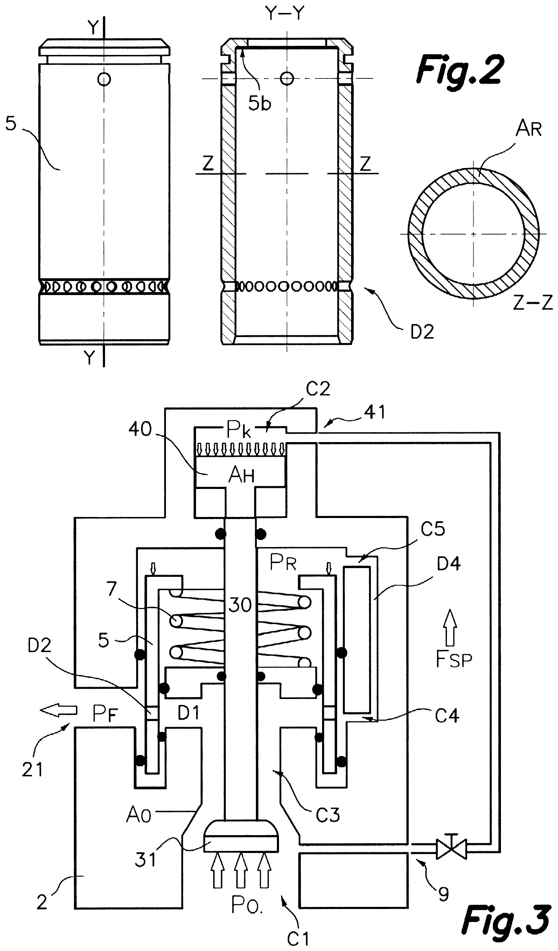

The discharge valve 1 further comprises a cylindrical sleeve 5 with an annular inner wall 5a (as seen in **FIG. 2****)** at one end, the cylindrical sleeve being coaxial with the piston 30, said annular inner wall 5a mounted on and in contact with a coaxial second spring 7 and comprising a plurality of orifices D2. In an initial position, the orifices D2 of the cylindrical sleeve 5 are substantially aligned with transversal feeding passageways D1 from the main chamber C3 so that the pressurised fluid may enter an annular outlet chamber C4, once the movable mechanism 3 has shifted to an open position.

**FIG. 1b** shows detailed view **A,** as referenced in **FIG. 1a****,** which illustrates an amplified representation of a rupture disc 8 positioned in a transversal passageway from the first chamber C1, substantially parallel to the discharge outlet 21, which leads to the exterior of the body 2. The rupture disc 8 is used as a safety measure to avoid over-pressurisation in the discharge valve 1.

On the other hand, **FIG. 1c** illustrates an amplified representation of detailed view **B,** as referenced in **FIG. 1a****,** in order to better understand how the different chambers C3, C4 and C5, and the different passageways D1, D2, D3, D4 and D5, described previously are connected.

In particular embodiments of the discharge valve 1, it may include one or more secondary components which increase the security and/or performance of the valve 1, such as one or more gaskets and/or o-rings arranged in recesses adjacent to the cylindrical sleeve 5 and proximal to the location of the orifices D2 of the cylindrical sleeve 5, which aid in directing the flow of the pressurised fluid, avoiding possible leaks, such as gasket 10 located below orifices D2 of the cylindrical sleeve 5. The plug 31 of the piston 30 of the movable mechanism 3 may also include a gasket 32 arranged, in a recess of said plug 31, in order to seal off the opening between the first chamber C1 and the main chamber C3 of the discharge valve 1 adequately, avoiding possible leaks which can generate pressure loss, which would affect the overall performance of the discharge valve 1.

These gaskets, 10 and 32, as well as other gaskets and o-rings located in the discharge valve are preferably made of a suitable polymer capable of withstanding the effects of high pressures without degrading rapidly, such as silicon or polytetrafluoroethylene (PTFE) also commonly known as Teflon or Viton (which are brand names for different fluoropolymers compositions frequently used) amongst others.

In order to regulate and discharge the pressurised fluid from one or more pressurised vessels into the pipe installation (not shown), the following steps are undertaken in the discharge valve 1, as seen in **FIG. 1a****:**
i. release the pressurised fluid stored in a pressure vessel into the first pressurised chamber, C1, adjacent to an inlet 20 of the discharge valve 1;
ii. pressurise the second chamber C2 of the pneumatic actuator 4 by inserting pressure into the second chamber C2 from a pressure source, until the pressure is capable of moving the secondary piston 40 of the pneumatic actuator 4, which in turn moves the piston 30 of the movable mechanism 3, counteracting a force exerted by a first spring 6 against the plug 31 of the piston 30, thus allowing the pressurised fluid in the first chamber C1 to flow into the main chamber C3 of the body 2 of the discharge valve 1 by moving the plug 31 placed at the end of the piston 30;
iii. the pressurised fluid in the main chamber C3 then flows towards the outlet annular chamber C4, which surrounds and is adjacent to the main chamber C3, through transversal feeding passageways D1 which are substantially aligned with orifices D2 of the cylindrical sleeve 5;
iv. the pressurized fluid in the outlet chamber C4 then simultaneously flows towards the discharge passageway D3 which leads to the discharge outlet 21 of the discharge valve 1 and towards the regulating annular chamber C5;
v. the pressurised fluid in the regulating chamber C5, moves the cylindrical sleeve 5 by acting against an upper annular surface of the cylindrical sleeve 5, counteracting a force exerted by a second spring 7 exerting a counteracting force against an opposite inner annular surface of the cylindrical sleeve 5, until the exerted pressure by the pressurised fluid is approximately the desired discharge pressure;
vi. simultaneously, a Venturi effect or phenomenon occurs, generating a suction or vacuum at an end of the discharge passageway D5, near the discharge outlet 21;
vii. as soon as the orifices D2 of the cylindrical sleeve 5 are no longer aligned with outlet chamber C4, and are adjacent or proximal to a gasket 10, the flow of the pressurised fluid towards the discharge outlet 21 is stopped, so that the discharge pressure doesn't exceed a predetermined value; and
viii. when the flow of the pressurised fluid is interrupted, the downwards force acting against the cylindrical sleeve 5 gradually decreases and therefore no longer counteracting the force generated by spring 7, so that the spring 7 returns the cylindrical sleeve 5 to its initial starting/original position, in order to begin the cycle again.

Therefore due to the up and down lineal movement performed by the cylindrical sleeve 5, a dynamic control of the pressure takes effect.

As seen schematically in **FIG. 3****,** in a particular embodiment of the discharge valve 1 the pressure source inserted in the second chamber C2 through the inlet 41 of the pneumatic actuator 4 may be the pressurised fluid inserted directly into the discharge valve 1 by means of a suitable auxiliary device or mechanism which is connected to both the connector 9 of the first chamber C1 and the inlet 41 of the pneumatic actuator 4.

**FIG. 2** illustrates a front view and section view of the cylindrical sleeve 5, as well as a section showing an annular surface area A_{R} of the cylindrical sleeve 5, and which shows how the plurality of orifices D2 are spatially arranged around a lower portion of the body of the cylindrical sleeve 5. The orifices D2 are distributed radially around the cylindrical sleeve, preferably at the same height with regards to an end of the sleeve 5 and equidistant from one another. The cylindrical sleeve 5 comprises an end annular inner wall 5b, which is used to support itself on the second spring 7.

Finally, **FIG. 3** illustrates a schematic simplified representation of the disclosed discharge valve 1, and references the different pressures and forces (wherein a force, F, can be the result of multiplying a pressure, P, by the surface area, A, on which said pressure, P, is applied) which must be considered, such as:
- a high pressure Po of a pressurised fluid inserted into the discharge valve through inlet 20 from a high pressurised vessel (not shown), which must be regulated in order to reduce it;
- an opening pressure Pk, used to move a movable mechanism 3 of the discharge valve 1, which in this particular embodiment is equivalent to Po inserted in the discharge valve 1;
- a regulating pressure, P_{R}, which is equivalent to a slightly reduced pressure Po, as it has gone through different stages inside the valve and exerts a pressure against a surface of the cylindrical sleeve 5 opposite the inner wall 5b;
- a discharge pressure, Pf, exiting the discharge outlet 21 into the distribution or piping installation of the fire-fighting system, as a result of adjusting and reducing the high pressure Po of the pressurised fluid; and
- a force, F_{SP}, which is the force exerted by a second spring 7 against an inner annular wall 5b of the cylindrical sleeve 5, in an opposite direction to the regulating pressure P_{R}, counteracting it.

The discharge valve 1 disclosed herein differs with regards to other discharge valves available in the present state of the art due to the fact that pressures Po and Pk which act against specific areas of the movable mechanism 3, such as the plug 31 of the piston 30 and the secondary piston 40, respectively, have no effect in the regulation or adjustment of the pressurised fluid, other than moving the movable mechanism 3 when necessary so the pressurised fluid can enter the discharge valve 1.

The only forces that are used in order to obtain the set discharge pressure Pf are a downwards regulating force F_{R} which is the result of multiplying the regulating pressure P_{R} x upper surface area A_{R} (as seen in FIG. 2) of the cylindrical sleeve 5, opposite the inner wall 5b, and the counteracting force F_{SP} exerted by the second spring 7.

Therefore the disclosed valve 1, eliminates the need to take into account the effect generated by the high pressure Po, which is unstable, difficult to control and whose flow isn't constant when being discharged into the valve 1.

## Claims

1. A discharge valve, for regulating a pressurised fluid discharged from a pressurised vessel into a pipe installation, comprising a body with a plurality of hollow chambers connected through passageways of different cross-sections, said body including:
- a first pressurised chamber (C1) and a second pressurised chamber (C2), said first pressurised chamber (C1) is connected to a pressurised fluid (Po) vessel and said second chamber (C2) is connected to a pressure source,
- a discharge outlet (21) connected to said pipe installation,
- a movable mechanism (3) configured to perform a lineal movement along a central axis of the valve body (2) between a closed position and an open position, in response to said pressure source, wherein in said open position said pressurised fluid is transferred from the first chamber (C1) to a main chamber (C3),
**characterised in that** the discharge valve (1) further comprises a cylindrical sleeve (5) with an annular inner wall (5b), coaxial to said movable mechanism (3), resting on top of and surrounding a pre-set spring (7) which is configured to perform an opposing force against said annular inner wall (5b) and **in that** the pressurised fluid is transferred from said main chamber (C3) to an outlet chamber (C4) and to the discharge outlet (21) through transversal feeding passageways (D1) of said main chamber (C3) aligned with orifices (D2) of the cylindrical sleeve (5);
wherein the outlet chamber (C4) is also connected through passageway (D4) to a regulating chamber (C5), which allows the pressurised fluid to exert a pressure on an annular upper surface opposite said inner wall (5b) of the cylindrical sleeve (5), to counteract said opposing force of the spring (7); and
wherein the regulating chamber (C5) is also in communication with the discharge outlet (21) through at least one discharge passageway (D5), so that a Venturi effect is created at an end of said discharge passageway (D5) by the pressurised fluid (Po) exiting the discharge outlet (21);
whereby changes in the pressure value of the regulating chamber (C5) occur and provide a dynamic lineal bidirectional movement of the cylindrical sleeve (5) to regulate the pressure of the pressurised fluid outputted (Pf) into the pipe installation, as a function of the axial position within the valve body (2) of the orifices (D2) regarding transversal feeding passageways (D1).

2. Discharge valve according to claim 1, wherein the movable mechanism (3) comprises a piston (30) and a spring (6), wherein a distal end of said piston (30) comprises a plug (31) which is in contact with an upper annular surface of said spring (6) which controls the flow of the pressurised fluid (Po) between the first (C1) and the main (C3) chambers.

3. Discharge valve according to claim 2, wherein the movable mechanism (3) further comprises a secondary piston (40) configured to perform a lineal movement due to the pressure inserted through the second pressure chamber (C2) configured to perform a downwards pressure on the secondary piston (40) which in turn generates a lineal movement on the piston (30), wherein the piston (30) shifts from a closed position to an open position, overcoming an opposing force of the spring (6).

4. Discharge valve according to claim 2 or 3, wherein the lineal movement of the piston (30) is limited either by a pre-set load of the spring (6), the stroke of the secondary piston (40) or a combination thereof.

5. Discharge valve according to claim 3, wherein the piston (30) and the secondary piston (40) are coaxial.

6. Discharge valve according to claim 1, wherein the cylindrical sleeve (5) comprises a plurality of orifices (D2) distributed radially and at equal distance of the end of the sleeve (5).

7. Discharge valve according to claim 6, wherein said plurality of orifices (D2) are equidistant from one another.

8. Discharge valve according to claim 1, wherein the valve body further comprises one or more gaskets (10) arranged in recesses adjacent to the cylindrical sleeve (5) and proximal to the location of said orifices (D2) of the cylindrical sleeve (5).

9. Discharge valve according to claim 1, wherein the first chamber (C1) further comprises a rupture disc (8) and/or a connector (9) to connect an auxiliary device.

10. Discharge valve according to claim 1, wherein the second chamber (C2) and the secondary piston (40) are part of a pneumatic actuator (4) arranged on a top part of the body (2) of the discharge valve (1), opposite a pressure inlet (20) of the pressurised fluid (Po).

11. Discharge valve according to claim 1, wherein the transversal feeding passageways (D1) are aligned and facing an entrance to the outlet chamber (C4) and an entrance to the discharge outlet (21) through discharge passageway (D3).

## Patentansprüche

1. Abgabeventil zum Regulieren eines unter Druck stehenden Fluids, das aus einem unter Druck stehenden Behälter in eine Rohrinstallation abgegeben wird, umfassend einen Körper mit einer Vielzahl von Hohlkammern, die durch Kanäle mit unterschiedlichen Querschnitten verbunden sind, wobei der Körper einschließt:
- eine erste unter Druck stehende Kammer (C1) und eine zweite unter Druck stehende Kammer (C2), wobei die erste unter Druck stehende Kammer (C1) mit einem Behälter für unter Druck stehendes Fluid (Po) verbunden ist und die zweite Kammer (C2) mit einer Druckquelle verbunden ist,
- einen Abgabeauslass (21), der mit der Rohrinstallation verbunden ist,
- einen beweglichen Mechanismus (3), der konfiguriert ist, um eine lineare Bewegung entlang einer Mittelachse des Ventilkörpers (2) zwischen einer geschlossenen Position und einer offenen Position als Reaktion auf die Druckquelle auszuführen, wobei das unter Druck stehende Fluid in der offenen Position von der ersten Kammer (C1) zu einer Hauptkammer (C3) übertragen wird,
**dadurch gekennzeichnet, dass** das Abgabeventil (1) ferner eine zylindrische Hülse (5) mit einer ringförmigen Innenwand (5b) umfasst, die koaxial zu dem beweglichen Mechanismus (3) liegt und auf einer voreingestellten Feder (7) ruht, die konfiguriert ist, um eine Gegenkraft gegen die ringförmige Innenwand (5b) auszuüben, und dadurch, dass das unter Druck stehende Fluid von der Hauptkammer (C3) zu einer Auslasskammer (C4) und zum Abgabeauslass (21) durch quer verlaufende Zufuhrkanäle (D1) der Hauptkammer (C3) übertragen wird, die mit Öffnungen (D2) der zylindrischen Hülse (5) ausgerichtet sind;
wobei die Auslasskammer (C4) auch durch den Kanal (D4) mit einer Regulierungskammer (C5) verbunden ist, die dem unter Druck stehenden Fluid ermöglicht, einen Druck auf eine ringförmige obere Oberfläche gegenüber der Innenwand (5b) der zylindrischen Hülse (5) auszuüben, um der Gegenkraft der Feder (7) entgegenzuwirken; und wobei die Regulierungskammer (C5) auch durch mindestens einen Abgabekanal (D5) mit dem Abgabeauslass (21) in Verbindung steht, so dass an einem Ende des Abgabekanals (D5) durch das unter Druck stehende Fluid (Po), das aus dem Abgabeauslass (21) austritt, ein Venturi-Effekt erzeugt wird;
wobei Änderungen des Druckwerts der Regulierungskammer (C5) auftreten und eine dynamische lineare bidirektionale Bewegung der zylindrischen Hülse (5) bereitstellen, um den Druck des in die Rohrinstallation abgegebenen unter Druck stehenden Fluids (Pf) in Abhängigkeit von der axialen Position innerhalb des Ventilkörpers (2) der Öffnungen (D2) in Bezug auf quer verlaufende Zufuhrkanäle (D1) zu regulieren.

2. Abgabeventil nach Anspruch 1, wobei der bewegliche Mechanismus (3) einen Kolben (30) und eine Feder (6) umfasst, wobei ein distales Ende des Kolbens (30) einen Stopfen (31) umfasst, der mit einer oberen ringförmigen Oberfläche der Feder (6) in Kontakt steht, die den Fluss des unter Druck stehenden Fluids (Po) zwischen der ersten (C1) und der Hauptkammer (C3) steuert.

3. Abgabeventil nach Anspruch 2, wobei der bewegliche Mechanismus (3) ferner einen Sekundärkolben (40) umfasst, der konfiguriert ist, um eine lineare Bewegung aufgrund des Drucks auszuführen, der durch die zweite Druckkammer (C2) eingeführt wird, die konfiguriert ist, um einen Abwärtsdruck auf den Sekundärkolben (40) auszuüben, der wiederum eine lineare Bewegung am Kolben (30) erzeugt, wobei der Kolben (30) von einer geschlossenen Position in eine offene Position wechselt und eine Gegenkraft der Feder (6) überwindet.

4. Abgabeventil nach Anspruch 2 oder 3, wobei die lineare Bewegung des Kolbens (30) entweder durch eine voreingestellte Last der Feder (6), den Hub des Sekundärkolbens (40) oder eine Kombination davon begrenzt ist.

5. Abgabeventil nach Anspruch 3, wobei der Kolben (30) und der Sekundärkolben (40) koaxial sind.

6. Abgabeventil nach Anspruch 1, wobei die zylindrische Hülse (5) eine Vielzahl von Öffnungen (D2) umfasst, die radial und in gleichem Abstand vom Ende der Hülse (5) verteilt sind.

7. Abgabeventil nach Anspruch 6, wobei die Vielzahl von Öffnungen (D2) äquidistant voneinander sind.

8. Abgabeventil nach Anspruch 1, wobei der Ventilkörper ferner eine oder mehrere Dichtungen (10) umfasst, die in Aussparungen benachbart zu der zylindrischen Hülse (5) und proximal zur Position der Öffnungen (D2) der zylindrischen Hülse (5) angeordnet sind.

9. Abgabeventil nach Anspruch 1, wobei die erste Kammer (C1) ferner eine Berstscheibe (8) und/oder einen Verbinder (9) zum Verbinden einer Hilfsvorrichtung umfasst.

10. Abgabeventil nach Anspruch 1, wobei die zweite Kammer (C2) und der Sekundärkolben (40) Teil eines pneumatischen Aktuators (4) sind, der an einem oberen Teil des Körpers (2) des Auslassventils (1) gegenüber einem Druckeinlass (20) des unter Druck stehenden Fluids (Po) angeordnet ist.

11. Abgabeventil nach Anspruch 1, wobei die quer verlaufenden Zufuhrkanäle (D1) ausgerichtet sind und einem Eingang zur Auslasskammer (C4) und einem Eingang zum Abgabeauslass (21) durch den Abgabekanal (D3) zugewandt sind.

## Revendications

1. Soupape de décharge, pour la régulation d'un fluide sous pression déchargé d'un récipient sous pression dans une installation de tuyaux, comprenant un corps avec une pluralité de chambres creuses raccordées à travers des passages de différentes sections transversales, ledit corps comportant :
- une première chambre sous pression (C1) et une deuxième chambre sous pression (C2), ladite première chambre sous pression (C1) est raccordée à un récipient de fluide sous pression (Po) et ladite deuxième chambre (C2) est raccordée à une source de pression,
- une sortie de décharge (21) raccordée à ladite installation de tuyaux,
- un mécanisme mobile (3) configuré pour effectuer un mouvement linéaire le long d'un axe central du corps (2) de soupape entre une position fermée et une position ouverte, en réponse à ladite source de pression, dans laquelle, dans ladite position ouverte, ledit fluide sous pression est transféré de la première chambre (C1) à une chambre principale (C3),
**caractérisée en ce que** la soupape de décharge (1) comprend en outre un manchon cylindrique (5) avec une paroi interne annulaire (5b), coaxial audit mécanisme mobile (3), en appui au-dessus et entourant un ressort préréglé (7) qui est configuré pour exercer une force opposée contre ladite paroi intérieure annulaire (5b) et **en ce que** le fluide sous pression est transféré de ladite chambre principale (C3) à une chambre de sortie (C4) et à la sortie de décharge (21) à travers des passages d'alimentation transversaux (D1) de ladite chambre principale (C3) alignés avec les orifices (D2) du manchon cylindrique (5) ;
dans laquelle la chambre de sortie (C4) est également raccordée par le passage (D4) à une chambre de régulation (C5), qui permet au fluide sous pression d'exercer une pression sur une surface supérieure annulaire opposée à ladite paroi interne (5b) du manchon cylindrique (5), pour contrecarrer ladite force opposée du ressort (7) ; et
dans laquelle la chambre de régulation (C5) est également en communication avec la sortie de décharge (21) à travers au moins un passage de décharge (D5), de sorte qu'un effet Venturi soit créé à une extrémité dudit passage de décharge (D5) par le fluide sous pression (Po) sortant de la sortie de décharge (21) ;
moyennant quoi des modifications de la valeur de pression de la chambre de régulation (C5) se produisent et fournissent un mouvement bidirectionnel linéaire dynamique du manchon cylindrique (5) pour réguler la pression du fluide sous pression sortant (Pf) dans l'installation de tuyaux, en fonction de la position axiale à l'intérieur du corps (2) de soupape des orifices (D2) par rapport aux passages d'alimentation transversaux (D1).

2. Soupape de décharge selon la revendication 1, dans laquelle le mécanisme mobile (3) comprend un piston (30) et un ressort (6), dans laquelle une extrémité distale dudit piston (30) comprend un bouchon (31) qui est en contact avec une surface annulaire supérieure dudit ressort (6) qui contrôle l'écoulement du fluide sous pression (Po) entre les chambres première (C1) et principale (C3).

3. Soupape de décharge selon la revendication 2, dans laquelle le mécanisme mobile (3) comprend en outre un piston secondaire (40) configuré pour effectuer un mouvement linéaire dû à la pression insérée à travers la deuxième chambre de pression (C2) configuré pour exercer une pression descendante sur le piston secondaire (40) qui génère à son tour un mouvement linéaire sur le piston (30), dans laquelle le piston (30) passe d'une position fermée à une position ouverte, surmontant une force opposée du ressort (6).

4. Soupape de décharge selon la revendication 2 ou 3, dans laquelle le mouvement linéaire du piston (30) est limité soit par une charge préréglée du ressort (6), soit par la course du piston secondaire (40) soit par une combinaison de ceux-ci.

5. Soupape de décharge selon la revendication 3, dans laquelle le piston (30) et le piston secondaire (40) sont coaxiaux.

6. Soupape de décharge selon la revendication 1, dans laquelle le manchon cylindrique (5) comprend une pluralité d'orifices (D2) répartis radialement et à égale distance de l'extrémité du manchon (5).

7. Soupape de décharge selon la revendication 6, dans laquelle ladite pluralité d'orifices (D2) sont équidistants les uns des autres.

8. Soupape de décharge selon la revendication 1, dans laquelle le corps de soupape comprend en outre un ou plusieurs joints (10) agencés dans des évidements adjacents au manchon cylindrique (5) et proches de l'emplacement desdits orifices (D2) du manchon cylindrique (5).

9. Soupape de décharge selon la revendication 1, dans laquelle la première chambre (C1) comprend en outre un disque de rupture (8) et/ou un raccord (9) pour raccorder un dispositif auxiliaire.

10. Soupape de décharge selon la revendication 1, dans laquelle la deuxième chambre (C2) et le piston secondaire (40) font partie d'un actionneur pneumatique (4) disposé sur une partie supérieure du corps (2) de la soupape de décharge (1), opposée à une entrée de pression (20) du fluide sous pression (Po).

11. Soupape de décharge selon la revendication 1, dans laquelle les passages d'alimentation transversaux (D1) sont alignés et font face à une entrée de la chambre de sortie (C4) et à une entrée de la sortie de décharge (21) à travers le passage de décharge (D3).
